(19) Europäisches Patentamt / European Patent Office / Office européen des brevets

(11) **EP 1 223 782 B1**

(12) **FASCICULE DE BREVET EUROPEEN**

(45) Date de publication et mention
de la délivrance du brevet:
**19.03.2008   Bulletin 2008/12**

(51) Int Cl.:
*H04Q 7/38* *(2006.01)*

(21) Numéro de dépôt: **02290057.5**

(22) Date de dépôt: **10.01.2002**

(54) **Procédé de gestion de ressources de traitement dans un système de radiocommunications mobiles**

Verfahren zum Verwalten von Verarbeitungsressourcen in einem Mobilfunksystem

Method for management of processing resources in a mobile radio communications system

(84) Etats contractants désignés:
**AT BE CH CY DE DK ES FI FR GB GR IE IT LI LU MC NL PT SE TR**

(30) Priorité:  **12.01.2001  FR 0100440**

(43) Date de publication de la demande:
**17.07.2002   Bulletin 2002/29**

(73) Titulaire: **Alcatel Lucent**
**75008 Paris (FR)**

(72) Inventeur: **Agin, Pascal**
**94370 Sucy en Brie (FR)**

(74) Mandataire: **El Manouni, Josiane**
**Alcatel Lucent**
**Intellectual Property & Standards**
**54 rue La Boétie**
**75008 Paris (FR)**

(56) Documents cités:
**WO-A-00/44189          WO-A-00/59160**
**WO-A-97/37503          WO-A-99/09779**
**FR-A- 2 794 596**

- **IERA A ET AL: "TRANSPORT AND CONTROL ISSUES IN MULTIMEDIA WIRELESS NETWORKS" WIRELESS NETWORKS, ACM, US, vol. 2, no. 3, 1 août 1996 (1996-08-01), pages 249-261, XP000625343 ISSN: 1022-0038**
- **EUROPEAN TELECOMMUNICATIONS STANDARDS INSTITUTE: 'UTRAN Iub Interface NBAP Signalling' ETSI TS 125 433 V3.2.0 Juin 2000, XP002166441**

**Description**

La présente invention concerne d'une manière générale les systèmes de radiocommunications mobiles, et plus particulièrement les systèmes utilisant la technique CDMA (pour "Code Division Multiple Access" en anglais).

La technique CDMA est notamment utilisée dans les systèmes dits de troisième génération, tels que notamment le système UMTS (pour "Universal Mobile Telecommunication System" en anglais).

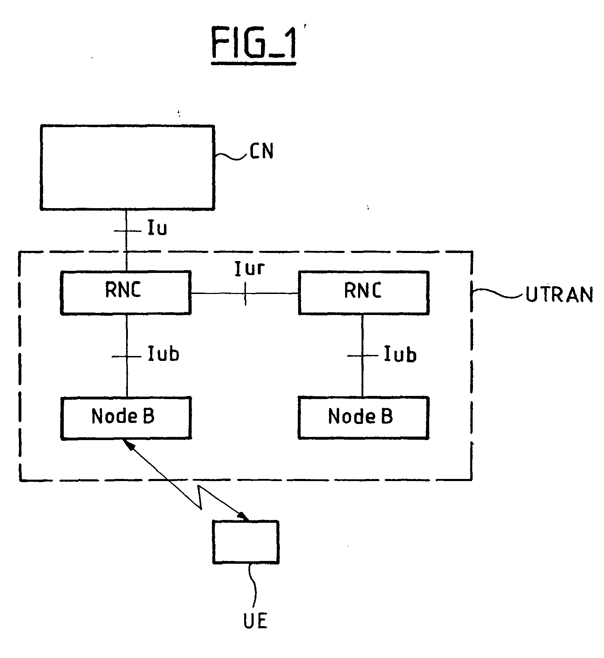

D'une manière générale, un réseau de radiocommunications mobiles comporte, comme rappelé sur la figure 1, un ensemble de stations de base et de contrôleurs de stations de base. Dans l'UMTS, ce réseau est aussi appelé UTRAN, pour "UMTS Terrestrial Radio Access Network", les stations de base sont aussi appelées Node B, et les contrôleurs de stations de base sont aussi appelés RNC (pour "Radio Network Controller" en anglais).

L'UTRAN est en relation d'une part avec des stations mobiles (appelées aussi équipements utilisateur, ou "User Equipment" ou UE), par une interface appelée interface « Uu », et d'autre part avec un coeur de réseau, ou CN (pour « Core Network » en anglais), par une interface appelée interface « lu ».

Comme rappelé sur la figure 1, les RNC sont reliés :

- aux Node B par une interface appelée interface « lub »,
- entre eux par une interface appelée interface « lur »,
- au coeur de réseau CN par une interface appelée interface « lu ».

Pour un Node B donné, le RNC qui le contrôle est aussi appelé CRNC (pour « Controlling Radio Network Controller » en anglais), et est donc relié à ce Node B via l'interface « lub ». Le CRNC a un rôle de contrôle de charge et de contrôle et d'allocation de ressources radio pour les Node B qu'il contrôle.

Pour une communication donnée relative à un équipement utilisateur UE donné, il existe un RNC, appelé SRNC (pour « Serving Radio Network Controller » en anglais) qui est connecté au coeur de réseau CN via l'interface « lu ». Le SRNC a un rôle de contrôle pour la communication considérée, incluant des fonctions d'ajout ou de retrait de liens radio (selon la technique de transmission en macro-diversité), de contrôle de paramètres susceptibles de changer en cours de communication, tels que débit, puissance, facteur d'étalement, ...etc.

Dans les systèmes CDMA les limitations de capacité sur l'interface radio sont fondamentalement différentes de ce qu'elles sont dans les systèmes utilisant d'autres techniques d'accès multiple, telles que notamment la technique TDMA (pour "Time Division Multiple Access" en anglais). La technique TDMA est notamment utilisée dans les systèmes dits de deuxième génération tels que le système GSM (pour "Global System for Mobile communications" en anglais). Dans les systèmes CDMA, tous les utilisateurs partagent la même ressource de fréquence à tout instant. La capacité de ces systèmes est donc limitée par les interférences, ces systèmes étant aussi appelés pour cette raison "soft limited systems" (en anglais).

C'est pourquoi, dans les systèmes CDMA, on prévoit des algorithmes tels que des algorithmes dits de contrôle de charge (ou "load control " en anglais), pour prévenir les surcharges, les détecter et le cas échéant les corriger, afin d'éviter une dégradation de qualité, et des algorithmes dits de contrôle d'admission d'appel (ou "call admission control" en anglais), pour décider si la capacité d'une cellule non utilisée à un instant donné est suffisante pour accepter un nouvel appel dans cette cellule (en fonction de divers paramètres tels que le service requis pour cet appel, ...etc). Dans ce qui suit ces divers algorithmes seront aussi regroupés sous le terme général de contrôle de charge.

Ces algorithmes utilisent habituellement seulement des critères radio, et sont habituellement mis en oeuvre dans le CRNC, qui ne dispose pas d'informations sur la capacité de traitement des Node B qu'il contrôle. Dans ces conditions, il peut par exemple se produire qu'un nouvel appel soit accepté par le CRNC, puis finalement rejeté par manque de ressources de traitement dans le Node B, ce qui entraîne inutilement des traitements supplémentaires dans le CRNC et des échanges de signalisation supplémentaires entre CRNC et Node B.

Bien sûr il serait possible d'éviter ces inconvénients en prévoyant dans les Node B des ressources de traitement suffisantes pour couvrir tous les cas, y compris les cas de capacité maximale (correspondant au cas de très faible niveau d'interférence). Mais ceci conduirait à avoir des stations de base coûteuses, et surdimensionnées la plupart du temps. En outre, dans le cas d'introduction progressive des services offerts par ces systèmes, la capacité de traitement des stations de base peut être limitée au début de la mise en service de ces systèmes, puis progressivement augmentée ensuite.

Il serait donc souhaitable de tenir compte de la capacité de traitement des stations de base (ou Node B) pour le contrôle de la charge dans un tel système.

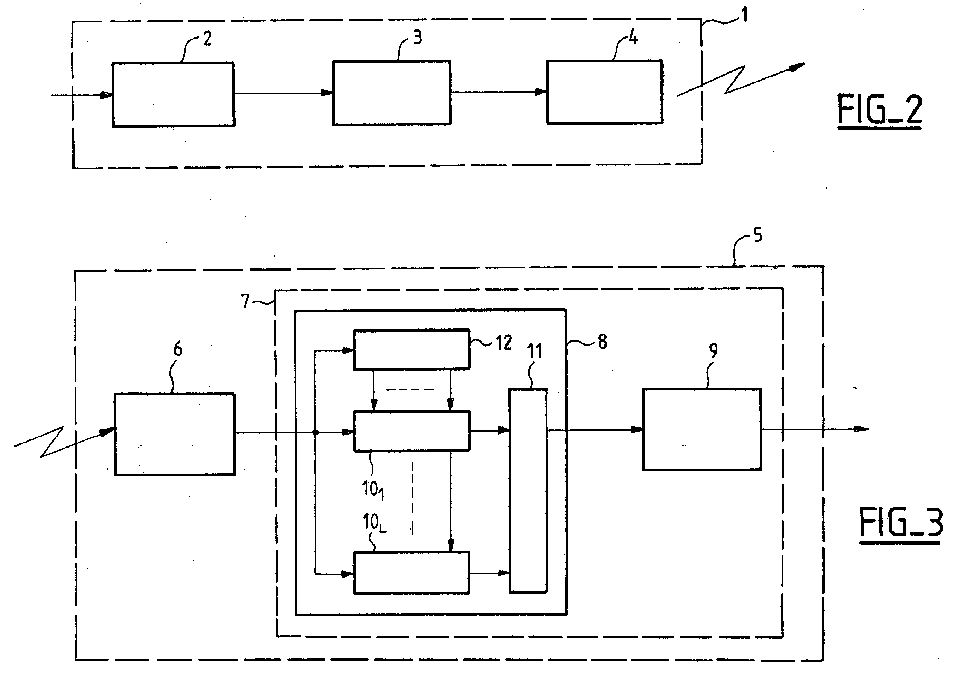

Les figures 2 et 3 rappellent les principaux traitements utilisés, respectivement en émission et en réception, dans une station de base telle que notamment un Node B pour le système UMTS.

Sur la figure 2 est illustré un émetteur 1 comportant:

- des moyens de codage-canal 2,

- des moyens d'étalement 3,
- des moyens d'émission radio-fréquence 4.

Ces différents traitements sont bien connus de l'homme du métier, et ne nécessitent pas d'être re-décrits ici de manière détaillée.

De manière connue, le codage-canal utilise des techniques telles que le codage correcteur d'erreurs et l'entrelacement, permettant d'obtenir une protection contre les erreurs de transmission.

Le codage (tel que le codage correcteur d'erreurs) est destiné à introduire une redondance dans les informations transmises. Le taux de codage est défini comme le rapport du nombre de bits d'information à transmettre sur le nombre de bits transmis ou bits codés. Différents niveaux de qualité de service peuvent être obtenus en utilisant différents types de codes correcteurs d'erreurs. Par exemple, dans l'UMTS, pour un premier type de trafic (tel que des données à haut débit) on utilise un premier type de code correcteur d'erreurs constitué par un turbo-code, et pour un deuxième type de trafic (tel que des données à plus faible débit ou de la voix) on utilise un deuxième type de code correcteur d'erreurs, constitué par un code convolutionnel.

Le codage-canal inclut aussi généralement une adaptation de débit destinée à adapter le débit à transmettre au débit offert pour sa transmission. L'adaptation de débit peut inclure des techniques telles que répétition et/ou poinçonnage, le taux d'adaptation de débit étant alors défini comme le taux de répétition et/ou de poinçonnage.

Le débit brut est défini comme le débit effectivement transmis sur l'interface radio. Le débit net est le débit obtenu après déduction, du débit brut, de tout ce qui n'est pas utile pour l'utilisateur, comme notamment la redondance introduite par le codage.

L'étalement utilise les principes connus de l'étalement de spectre. La longueur du code d'étalement utilisé est aussi appelée facteur d'étalement.

On rappelle que dans un système tel que notamment l'UMTS le débit net (appelé aussi par la suite plus simplement « débit ») peut varier au cours d'une même communication, et que le facteur d'étalement peut en outre varier en fonction du débit à transmettre.

Sur la figure 3 est illustré un récepteur 5 comportant:

- des moyens de réception radio-fréquence 6,
- des moyens 7 d'estimation des données reçues, comportant eux-mêmes notamment des moyens de désétalement 8 et des moyens de décodage-canal 9.

Ces différents traitements sont également bien connus de l'homme du métier, et ne nécessitent donc pas non plus d'être re-décrits ici de manière détaillée.

La figure 3 illustre un exemple de traitement pouvant être mis en oeuvre dans les moyens de désétalement 8. Ce traitement correspond en l'occurrence à celui mis en oeuvre dans un récepteur de type Rake, permettant d'améliorer la qualité de l'estimation des données reçues, en exploitant les phénomènes de multi-trajets, c'est-à-dire de propagation d'un même signal source selon des trajets multiples, obtenus notamment par réflexions multiples sur des éléments de l'environnement. Dans les systèmes CDMA, contrairement notamment aux systèmes TDMA, ces trajets multiples peuvent en effet être exploités pour améliorer la qualité de l'estimation des données reçues.

Un récepteur Rake comporte un ensemble de L doigts (ou "fingers" en anglais) notés $10_1$ à $10_L$, et des moyens 11 de combinaison des signaux issus de ces différents doigts. Chaque doigt permet de désétaler le signal reçu selon l'un des différents trajets pris en compte, les différents trajets pris en compte étant déterminés par des moyens 12 pour estimer la réponse impulsionnelle du canal de transmission. Les moyens 11 permettent de combiner les signaux désétalés correspondant aux différents trajets considérés, selon un traitement destiné à optimiser la qualité de l'estimation des données reçues.

La technique de réception au moyen d'un récepteur Rake est également utilisée en liaison avec la technique de transmission en macro-diversité, selon laquelle un même signal source est transmis simultanément à une même station mobile par plusieurs stations de base. La technique de transmission en macro-diversité permet non seulement d'améliorer les performances en réception, au moyen d'un récepteur Rake, mais aussi de minimiser les risques de perte d'appel lors de transferts inter-cellulaires, ou "handovers" en anglais. Pour cette raison elle est aussi appelée "soft handover" (en anglais), par opposition à la technique de "hard handover" selon laquelle une station mobile n'est connectée à chaque instant qu'à une seule station de base.

Les moyens d'estimation des données reçues peuvent en outre utiliser diverses techniques destinées à réduire les interférences telles que par exemple la technique dite de détection multi-utilisateur (ou "multi-user detection" en anglais).

Il est aussi possible d'utiliser une pluralité d'antennes de réception. Les moyens d'estimation des données reçues comportent alors en outre des moyens de combinaison des signaux obtenus pour ces différentes antennes de réception, également de manière à optimiser la qualité de l'estimation des données reçues.

Le décodage-canal inclut des fonctions telles qu'un désentrelacement et un décodage correcteur d'erreurs. Le décodage correcteur d'erreurs est généralement nettement plus complexe que le codage correcteur d'erreurs et peut utiliser des techniques telles que par exemple le décodage par maximum de vraisemblance. Par exemple, pour les codes convolutionnels, on peut utiliser un algorithme dit de Viterbi.

Pour pouvoir traiter simultanément plusieurs utilisateurs, une station de base ou Node B comporte un ensemble d'émetteurs et de récepteurs tels que l'émetteur et le récepteur ainsi rappelés. Une grande capacité de traitement est ainsi requise dans une station de base ou Node B, notamment, en réception, pour l'estimation des données reçues.

Comme indiqué précédemment, il est donc souhaitable de tenir compte de la capacité de traitement d'une station de base, pour le contrôle de la charge dans un système tel que le système UMTS par exemple.

Ainsi, pour le système UMTS, il est spécifié dans le document 3G TS 25.433 publié par le 3GPP ("3rd Generation Partnership Project") que le Node B signale au CRNC sa capacité de traitement globale (appelée "capacity credit"), et la quantité de cette capacité de traitement globale, ou coût d'allocation, qui est nécessaire pour l'allocation d'un canal physique, pour chaque valeur du facteur d'étalement (ou « spreading factor » en anglais, ou SF) possible dans ce système. L'ensemble des coûts d'allocation pour les différentes valeurs possibles du facteur d'étalement est aussi appelé loi de consommation de capacité (ou « capacity consumption law » en anglais). De telles informations sont signalées par un Node B au CRNC à chaque fois que la capacité de traitement de ce Node B est changée, en utilisant un message appelé « Resource Status Indication », ou en réponse à une requête du CRNC en utilisant un message appelé « Audit Response ».

Dans la demande de brevet français n° 0010538 déposée le 10 Août 2000 par le demandeur, il a été observé qu'une telle solution n'est pas bien adaptée pour tenir compte des limitations dans la capacité de traitement d'un Node B, notamment pour les raisons suivantes:

- Les traitements effectués dans le décodage-canal dépendent du débit net plutôt que du débit brut, ou encore du facteur d'étalement. Par exemple, en considérant un facteur d'étalement de 128 (et donc un débit brut de 30 kbps), le débit net peut avoir différentes valeurs suivant le taux de codage et le faux d'adaptation de débit, typiquement le débit net peut varier de 5 à 15 kbps. Par conséquent, pour un facteur d'étalement fixe, la quantité de traitement dans le Node B peut varier de manière significative (par exemple dans un rapport supérieur à 3). Or ceci n'est pas pris en compte dans cette solution antérieure.
- Le nombre de doigts de récepteur Rake requis pour l'estimation du canal de transmission et des données est fortement dépendant du nombre de liens radio. Or dans la solution antérieure le nombre maximum de doigts de récepteur Rake dans le Node B ne peut pas être pris en compte dans des algorithmes tels que des algorithmes de contrôle de charge ou d'admission d'appels car ce type de limitation n'est pas lié au facteur d'étalement.
- La capacité de traitement signalée par le Node B au CRNC est une capacité de traitement globale qui ne peut pas tenir compte des différentes limitations possibles dans la capacité de traitement de ce Node B.

Dans cette demande de brevet antérieure, il a été proposé une autre approche, selon laquelle, pour tenir compte des différentes limitations possibles dans la capacité de traitement d'un Node B, le Node B signale au CRNC un ou plusieurs paramètres tels que notamment le nombre maximum de liens radio pouvant être établis, et le débit net maximum pour les liens radio établis, éventuellement pour chaque sens de transmission et/ou pour chaque type de codage-canal susceptible d'être utilisé.

La présente invention a pour objet une nouvelle approche, selon laquelle on conserve la notion de capacité de traitement globale (ou « capacity crédit »), mais le coût d'allocation n'est plus signalé pour chaque valeur possible du facteur d'étalement mais pour différentes valeurs possibles du débit (le débit étant en effet plus représentatif de la capacité de traitement d'un Node B que le facteur d'étalement, comme observé par le demandeur, et comme déjà indiqué ci-dessus).

Une telle nouvelle approche implique cependant que de nouveaux problèmes soient résolus.

Un premier problème est que, alors que le nombre de facteurs d'étalement possibles est fini (par exemple, dans le système UMTS, 8 valeurs de facteur d'étalement sont possibles: 4, 8, 16, 32, 64, 128, 256, 512), le débit peut prendre n'importe quelle valeur positive. Or on comprend qu'en pratique il n'est pas possible ou réaliste que le Node B signale au CRNC le coût d'allocation pour toutes les valeurs de débit.

Un deuxième problème est que, pour la mise à jour du crédit de capacité à chaque allocation de ressources, en fonction du débit correspondant, le CRNC ne dispose pas, du moins dans l'état actuel de la norme, du débit. Au contraire, dans la solution antérieure rappelée précédemment, le CRNC a connaissance du facteur d'étalement car le facteur d'étalement est signalé par le SRNC au CRNC lorsqu'un nouveau lien radio est ajouté, retranché ou reconfiguré.

Un troisième problème est que le débit peut ne pas être fixe mais varier. Au contraire, le facteur d'étalement, au moins pour le sens descendant, est fixe (et signalé comme indiqué précédemment). Pour le sens montant, le facteur d'étalement est aussi variable mais, ainsi que l'a observé le demandeur, cet aspect du problème n'a pas été pris en considération dans la solution antérieure rappelée précédemment et utilisant le facteur d'étalement.

La présente invention permet en outre d'apporter une solution à ces différents problèmes.

Un des objets de la présente invention est ainsi un procédé de gestion de ressources de traitement dans un système de radiocommunications mobiles, dans lequel un contrôleur de stations de base gère des ressources radio et des ressources de traitement correspondantes, ces dernières étant prévues dans une stations de base, procédé dans lequel :

- la staton de base signale au contrôleur de stations de base sa capacité de traitement globale, ou crédit de capacité, et la quantité de cette capacité de traitement globale, ou coût d'allocation, nécessaire pour l'allocation de ressources radio,

- le contrôleur de stations de base met à jour le crédit de capacité à chaque allocation de ressources radio, procédé caractérisé en ce que :

  - la station de base signale au contrôleur de stations de base sa capacité de traitement globale, ou crédit de capacité, et la quantité de cette capacité de traitement globale,

  ou coût d'allocation, nécessaire pour l'allocation de ressources radio, pour différentes valeurs de débit,

  - le contrôleur de stations de base met à jour le crédit de capacité à chaque allocation de ressources radio, en fonction du débit correspondant.

On notera que le terme « allocation de ressources radio » est destiné à englober toutes les opérations suceptibles de modifier l'allocation des ressources radio à l'intérieur de ce système, ces opérations incluant non seulement les opérations d'allocation proprement dites, mais aussi de désallocation ou de reconfiguration.

Ainsi, dans le système UMTS, ces différentes opérations correspondent :

- pour les canaux de transport dédiés, aux procédures d'établissement, addition, effacement, ou reconfiguration, d'un lien radio (ou en anglais, « radio link set-up», «radio link addition», « radio link deletion », « radio link reconfiguration ») telles que définies dans le document 3G TS 25.433 publié par le 3GPP),
- pour les canaux de transport communs, lors des procédures d'établissement, effacement, ou reconfiguration, d'un canal commun (ou en anglais, «common transport channel set-up », « common transport channel deletion», «common transport channel reconfiguration») telles que définies dans le document 3G TS 25.433 publié par le 3GPP).

On notera aussi que le terme de « mise à jour » du crédit de capacité est destiné à recouvrir aussi bien des opérations par lesquelles ce crédit de capacité est débité, dans le cas où de nouvelles ressources radio sont requises, que des opérations par lesquelles ce crédit de capacité est crédité, dans le cas où de nouvelles ressources radio ne sont plus nécessaires et sont donc restituées.

Ainsi :

- pour les procédures de « radio link set-up », « radio link addition », et « common transport channel set-up », le crédit de capacité est débité,
- pour les procédures de «radio link deletion », et de « common transport channel deletion », le crédit de capacité est crédité,
- pour le cas de « radio link reconfiguration » et de « common transport channel reconfiguration » le crédit de capacité est débité ou crédité selon que la différence entre le coût d'allocation pour le nouveau débit et pour l'ancien débit est négative ou positive.

Suivant une autre caractéristique, lesdites différentes valeurs de débit correspondent à des valeurs de débit prédéterminées appelées débits de référence.

Suivant une autre caractéristique, le coût d'allocation pour ledit débit correspondant est obtenu à partir du coût d'allocation pour des débits de référence.

Suivant une autre caractéristique, le coût d'allocation pour ledit débit correspondant est obtenu par interpolation à partir du coût d'allocation pour des débits de référence.

Suivant une autre caractéristique, lorsque le débit $R$ n'est pas un débit de référence, le coût d'allocation *"Consumption_cost"* est calculé en fonction des coûts d'allocation $C_{inf}$ et $C_{sup}$ correspondant aux débits de reference $R_{inf}$ et $R_{sup}$ (avec $R_{inf} < R_{sup}$) qui sont les plus proches du débit $R$, selon la relation suivante :

$$Consumption\_cost = C_{\text{inf}} + \frac{R - R_{\text{inf}}}{R_{\text{sup}} - R_{\text{inf}}}\left(C_{\text{sup}} - C_{\text{inf}}\right)$$

Suivant une autre caractéristique, si le résultat de l'interpolation est négatif, le coût d'allocation est fixé égal à zéro.

Suivant une autre caractéristique, ledit débit correspondant correspond à un débit maximum.

une autre caractéristique, ledit débit maximum est obtenu suivant l'expression :

$$Maximum\_bit\_rate = \operatorname*{Max}_{j} br_{j}$$

avec :

$$br_{j} = \sum_{k=1}^{n} \frac{N_{k}^{(j)} L_{k}^{(j)}}{TTI_{k}}$$

où $br_j$ est le débit du $j^{\text{ème}}$ TFC, ou $j^{\text{ème}}$ combinaison de formats de transport, dans un TFCS, ou ensemble de combinaisons de formats de transport, $n$ est le nombre de canaux de transport multiplexés dans un même canal de transport composite codé, $N_k^{(j)}$ et $L_k^{(j)}$ sont respectivement le nombre de blocs de transport et la taille des blocs de transport (en nombre de bits) pour le k$^{\text{ème}}$ canal de transport dans le $j^{\text{ème}}$ TFC et $TTI_k$ est l'intervalle de temps de transmission ou TTI (en secondes) du $k^{\text{ème}}$ canal de transport.

Suivant une autre caractéristique, ledit débit correspondant correspond à un débit effectif.

Suivant une autre caractéristique, des côuts d'allocation distincts sont signalés pour différents canaux de transport ou différents types de canaux de transport.

Suivant une outre carcatéristique, des coûts d'allocation distincts et des crédits de capacité distincts sont signalés pour les sens de transmission montant et descendant.

Suivant une autre caractéristique, des coûts d'allocation distincts sont signalés pour le cas de premier lien radio et pour le cas de lien radio additionnel.

Suivant une autre caractéristique, des coûts d'allocation distincts sont signalés pour différents types de traitement, notamment pour différents types de codage-canal.

Suivant une autre caractéristique, des coûts d'allocation distincts sont signalés pour différents canaux de transport multiplexés à l'intérieur d'un même canal de transport composite codé.

Suivant une autre caractéristique ledit système est un système de type GC3N1H.

Un autre objet de la présente invention est un système de radiocommunications mobiles, pour la mise en oeuvre d'un tel procédé, dans lequel un contrôleur dé stations de base gère des ressources radio et des ressources de traitement correspondantes, ces dernières étant prévues dans une station de base, système étant essentiellement tel que:

- la station de basé comporte des moyens pour signaler au contrôleur de stations de base sa capacité de traitement globale, ou crédit de capacité, et la quantité de cette capacité de traitement globale, ou coût d'allocation, nécessaire pour l'allocation de ressources radio, pour différentes valeurs de débit,

- le contrôleur de stations de base comporte des moyens pour mettre à jour le crédit de capacité a chaque allocation de ressources radio, en fonction du débit correspondant.

Un autre objet de la présente invention est une station de base pour système de radiocommunications mobiles, pour la mise en oeuvre d'un tel procédé, cette station de base comportant essentiellement :

- des moyens pour signaler à un contrôleur de stations de base sa capacité de traitement globale, ou crédit de capacité, et la quantité de cette capacité de traitement globale, ou coût d'allocation, nécessaire pour l'allocation de ressources radio, pour différentes valeurs de débit.

Un autre objet de la présente invention est un contrôleur de stations de base pour système de radiocommunications mobiles, pour la mise en oeuvre d'un tel procédé, ce contrôleur de stations de base comportant essentiellement:

- des moyens pour recevoir d'une station de base sa capacité de traitement globale, ou crédit de capacité, et la quantité de cette capacité de traitement globale, ou coût d'allocation, nécessaire pour l'allocation de ressources radio, pour différentes valeurs de débit,
- des moyens pour mettre à jour le crédit de capacité à chaque allocation de ressources radio, en fonction du débit correspondant.

D'autres objets et caractéristiques de la présente invention apparaîtront à la lecture de la description suivante d'exemples de réalisation, faite en relation avec les dessins ci-annexés dans lesquels:

- la figure 1, décrite précédemment, rappelle l'architecture générale d'un système de radiocommunications mobiles, tel que notamment le système UMTS,
- les figures 2 et 3, décrites précédemment, rappellent les principaux traitements utilisés, respectivement en émission et en réception, dans une station de base, telle qu'un Node B pour le système UMTS,
- la figure 4 est un schéma destiné à illustrer un exemple de mise en oeuvre d'un procédé suivant l'invention.

Un des objets de la présente invention est ainsi un procédé de gestion de ressources de traitement dans un système de radiocommunications mobiles, dans lequel une entité dite première entité (notamment un contrôleur de stations de base ou CRNC dans un système tel que le système UMTS) gère des ressources radio et des ressources de traitement correspondantes, ces dernières étant prévues dans une entité distincte dite deuxième entité (notamment une station de base ou Node B dans un système tel que le système UMTS), procédé dans lequel:

- la deuxième entité signale à la première entité sa capacité de traitement globale, ou crédit de capacité, et la quantité de cette capacité de traitement globale, ou coût d'allocation, nécessaire pour l'allocation de ressources radio, pour différentes valeurs de débit,
- la première entité met à jour le crédit de capacité à chaque allocation de ressources radio, en fonction du débit correspondant.

En d'autres termes, suivant la présente invention, on conserve la notion de capacité de traitement globale (ou « capacity credit »), mais le coût d'allocation n'est plus signalé pour chaque valeur possible du facteur d'étalement mais pour différentes valeurs possibles du débit (le débit étant en effet plus représentatif de la capacité de traitement d'un Node B que le facteur d'étalement, comme observé par le demandeur, et comme déjà indiqué précédemment).

En outre, pour résoudre le premier problème mentionné précédemment, il est proposé de signaler le coût pour seulement quelques valeurs typiques de débit appelées par la suite débits de référence, et une solution est en outre proposée pour déterminer le coût pour toute valeur de débit, à partir des coûts signalés pour les débits de référence. Par exemple, une interpolation linéaire peut être utilisée (c'est la solution la plus simple), tout en s'assurant que le coût reste toujours positif (c'est-à-dire si le résultat de l'interpolation est négatif, le coût résultant est égal à zéro).

Par exemple quand le débit $R$ n'est pas un débit de référence, le coût noté *"Consumption_cost"* est calculé en fonction des coûts $C_{inf}$ et $C_{sup}$ correspondant aux débits de reference $R_{inf}$ et $R_{sup}$ (avec $R_{inf} < R_{sup}$) qui sont les plus proches du débit $R$, selon la relation suivante:

$$Consumption\_cost = C_{inf} + \frac{R - R_{inf}}{R_{sup} - R_{inf}}\left(C_{sup} - C_{inf}\right) \qquad (1)$$

Si le résultat est négatif, le coût d'allocation peut être fixé à zéro, soit :

$$Consumption\_\cos t = 0 \,.$$

D'autres techniques d'interpolation pourraient bien entendu être utilisées.

Par ailleurs, à titre d'exemple de débits de référence, on peut citer par exemple les valeurs 4.75 kbps, 12.2 kbps, 64 kbps, 144 kbps, 384 kbps, 2048 kbps.

En outre, pour résoudre les deuxième et troisième problèmes mentionnés précédemment, dans un système tel que le système UMTS par exemple, une solution est de dériver le débit en fonction d'un paramètre appelé TFCS (pour « Transport Format Combination Set » en anglais).

On rappelle qu'une caractéristique d'un système tel que l'UMTS est la possibilité de transporter plusieurs services sur une même connexion, c'est-à-dire plusieurs canaux de transport sur un même canal physique. De tels canaux de transport (ou TrCH, pour "Transport Channels" en anglais) sont traités séparément selon un schéma de codage-canal (incluant un codage détecteur d'erreurs, un codage correcteur d'erreurs, une adaptation de débit, et un entrelacement, comme rappelé en relation avec la figure 2) avant d'être multiplexés temporellement pour former un canal de transport composite codé (ou CCTrCH, pour "Coded Composite Transport Channel" en anglais) à transmettre sur un ou plusieurs canaux physiques. Plus d'informations sur ces aspects de l'UMTS peuvent être trouvés dans le document 3G TS25 212 V3.0.0 publié par le 3GPP.

On rappelle également qu'une autre caractéristique d'un système tel que l'UMTS est d'autoriser des débits variables pour les utilisateurs, en cours de communication. Les données transportées par les canaux de transport sont organisées en unités de données appelées blocs de transport (ou « Transport Blocks » en anglais) reçus avec une périodicité appelée intervalle de temps de transmission (ou TTI, pour « Transmission Time Interval » en anglais). Le nombre et la taille des blocs de transport reçus pour un canal de transport donné sont variables en fonction du débit, et on définit la notion de format de transport comme la connaissance du nombre et de la taille de ces blocs de transport (et donc du débit instantané), pour un canal de transport donné. On définit aussi la notion de combinaison de format de transport (ou TFC, pour « Transport Format Combination » en anglais) comme une combinaison de formats de transport autorisée pour différents canaux de transport destinés à être multiplexés selon un même canal de transport composite codé. On définit enfin la notion d'ensemble de combinaisons de format de transport (ou TFCS, pour « Transport Format Combination Set » en anglais) comme l'ensemble de telles combinaisons possibles de formats de transport. Plus d'informations sur ces aspects de l'UMTS peuvent être trouvés dans le document TS 25.302 V.3.7.0 publié par le 3GPP.

Le débit pour chaque TFC à l'intérieur d'un TFCS peut alors être calculé selon la relation suivante:

$$br_j = \sum_{k=1}^{n} \frac{N_k^{(j)} L_k^{(j)}}{TTI_k} \qquad (2)$$

où $br_j$ est le débit du $j^{\text{ème}}$ TFC dans le TFCS, $n$ est le nombre de canaux de transport dans le CCTrCH, $N_k^{(j)}$ et $L_k^{(j)}$ sont respectivement le nombre de blocs de transport et la taille des blocs de transport (en nombre de bits) pour le $k^{\text{ème}}$ canal de transport dans le $j^{\text{ème}}$ TFC et $TTI_k$ est l'intervalle de temps de transmission ou TTI (en secondes) du $k^{\text{ème}}$ canal de transport.

D'autres formules pourraient bien entendu être utilisées, suivant la façon de définir le débit pour les données à traiter.

En outre, la difficulté est que le débit n'est pas fixe mais peut varier (c'est-à-dire n'importe quel TFC à l'intérieur du TFCS peut être utilisé pendant la communication) et cette variation n'est pas connue a priori du Node B ou de l'UE, et ne peut pas être connue a priori. La solution la plus simple est de considérer seulement le débit maximum, ou le débit qui maximise le coût d'allocation (ce dernier débit est habituellement égal au débit maximum mais ce n'est pas toujours le cas), parmi tous les TFC à l'intérieur du TFCS. En effet, lorsqu'un nouveau lien radio est accepté, il est nécessaire de vérifier que le Node B a des ressources suffisantes pour traiter jusqu'au débit maximum autorisé pour ce nouveau lien radio.

En notant « *Maximum_bit_rate* » le débit défini par la relation :

$$Maximum\_bit\_rate = \underset{j}{\text{Max}}\ br_j \qquad (3)$$

la relation (1) devient alors :

$$Consumption\_cost = C_{\text{inf}} + \frac{Maximum\_bit\_rate - R_{\text{inf}}}{R_{\text{sup}} - R_{\text{inf}}}\left(C_{\text{sup}} - C_{\text{inf}}\right) \qquad (4)$$

La gestion de ressources de traitement ainsi décrite repose donc sur les paramètres suivants qui nécessitent d'être signalés par le Node B au CRNC, à la fois pour les canaux de transport dédiés (correspondant au cas de ressources radio allouées individuellement à des utilisateurs) et pour les canaux de transport communs (correspondant au cas de ressources radio partagées entre plusieurs utilisateurs) :

- la capacité totale (ou crédit total) qui définit les ressources de traitement du Node B,
- la loi de consommation qui donne le coût d'allocation pour des débits de référence typiques, et qui permet de trouver (avec des techniques d'interpolation) les coûts d'allocation pour tous les débits possibles.

Deux messages de signalisation définis dans la norme peuvent être notamment utilisés dans ce but: un message appelé « Resource Status Indication », envoyé par le Node B au CRNC à chaque fois que les ressources de traitement du Node B sont changées, ou un message appelé « audit response », envoyé par le CRNC en réponse à une requête du RNC.

Le CRNC met alors à jour le crédit restant, à chaque allocation de ressource, c'est-à-dire, dans le système UMTS:

- pour les canaux dédiés, lors des procédures d'établissement, addition, effacement, ou reconfiguration, d'un lien radio (ou en anglais, « radio link set-up », « radio link addition », « radio link deletion », « radio link reconfiguration ») telles que définies dans le document 3G TS 25.433 publié par le 3GPP),
- pour les canaux communs, lors des procédures d'établissement, effacement, ou reconfiguration, d'un canal commun (ou en anglais, « common transport channel set-up », « common transport channel deletion », « common transport channel reconfiguration ») telles que définies dans le document 3G TS 25.433 publié par le 3GPP).

Dans la norme 3G TS 25.433, deux lois de consommation distinctes ont été définies , une pour les canaux dédiés, et une pour les canaux communs. Ainsi, dans le système UMTS, la loi de consommation pour les canaux dédiés s'applique aux canaux DCH (pour « Dedicated CHannel » en anglais) et DSCH (pour « Downlink Shared CHannel » en anglais), et la loi de consommation pour les canaux communs s'applique à des canaux tels que notamment RACH (pour « Random Access CHannel » en anglais), FACH (pour « Forward Access CHannel » en anglais), CPCH (pour « Common Packet CHannel » en anglais), SCCPCH (pour « Secondary Common Control Physical CHannel » en anglais), ...etc.

La loi de consommation pour les canaux dédiés s'applique également au canal DSCH, car bien que ce canal soit en réalité un canal commun, il est toujours associé à un canal DCH, et les procédures d'établissement, d'effacement ou de reconfiguration qui concernent le canal DSCH concernent simultanément le canal DCH. Par exemple, pour une opération de « radio link setup » une ou deux opérations peuvent être effectuées : une pour le canal DCH et éventuellement une pour le canal DSCH, si un canal DSCH est associé au canal DCH.

Par ailleurs, ce procédé peut être effectué globalement pour les deux sens de transmission (montant et descendant) ou par sens de transmission (les sens montant et descendant étant traités séparément) : dans ce dernier cas un crédit total est donné pour chaque sens et le coût d'allocation est donné pour chaque débit de référence et pour chaque sens.

De plus, pour les canaux dédiés, il est possible de spécifier un coût d'allocation différent suivant que le lien radio considéré est ou non le premier (le deuxième cas correspondant à la situation où l'UE a plus d'un lien radio dans le même Node B, c'est-à-dire où l'UE est dans une situation dite, en anglais, de « softer-handover » avec ce Node B). On pourrait alors qualifier les coûts d'allocation correspondants de « coût pour un premier lien radio » et de « coût pour un lien radio additionnel ».

Cependant, comme la technique de « soft-handover » ou de « softer-handover » ne peut pas être utilisée pour le canal DSCH, il serait logique que le « coût pour un premier lien radio » s'applique toujours au cas du canal DSCH (alors que le coût pour un premier lien radio ou le coût pour un lien radio additionnel peuvent s'appliquer au cas du canal DCH). Une autre possibilité (moins intéressante) serait d'appliquer le « coût pour un lien radio additionnel » à la fois au canal DCH et au canal DSCH lorsque le lien radio considéré pour le canal DCH n'est pas le premier (et le « coût pour le premier lien radio » pour ces deux canaux dans le cas contraire).

Il serait aussi possible pour un certain canal physique ou de transport d'avoir un coût fixe qui ne dépend pas de son débit ou de son facteur d'étalement (même si le TFCS existe), éventuellement nul, mais qui pourrait dépendre d'autres paramètres tels que par exemple le sens de transmission (montant ou descendant).

Par exemple, un coût spécial pourrait être signalé pour des canaux physiques tels que AICH (pour « Acquisition Indication Channel », ou AP-AICH, ou CD/CA-ICH (pour « Collision Detection / Channel Assignment Indicator Channel »), ou encore CSICH (pour « CPCH Status Indication Channel ».

D'autres distinctions pourraient être ajoutées. Par exemple, un coût d'allocation différent pourrait être spécifié suivant le type de traitement, notamment suivant le type de codage-canal (par exemple, dans le système UMTS, suivant que l'on utilise un code convolutionnel ou un turbo-code).

Par ailleurs, l'exemple de solution décrit précédemment, consistant à considérer seulement le débit maximum, bien que plus simple, a cependant pour inconvénient que les ressources de traitement ainsi réservées dans le Node B sont probablement sur-estimées, puisqu'à chaque fois des ressources de traitement correspondant au débit maximum sont réservées. Il peut alors arriver que certaines ressources de traitement soient encore disponibles, alors que le crédit est vide. Dans ce cas, une demande de nouveau lien radio ou de canal de transport commun pourrait être rejetée alors que des ressources de traitement suffisantes étaient disponibles dans le Node B.

Une solution pour éviter un tel inconvénient serait que le CRNC ne calcule pas le crédit restant sur la base du débit maximum mais sur la base du débit effectif. Ce débit effectif est connu du TFC en cours tel que rappelé précédemment. Dans ce cas, les mêmes informations seraient toujours signalées par le Node B au CRNC, et seul l'algorithme de mise à jour du crédit restant, implémenté dans le CRNC, changerait : il serait alors nécessaire de mettre à jour ce crédit plus fréquemment (à chaque fois que le TFC change).

Pour les canaux dédiés (DCH), une difficulté pour mettre en oeuvre une telle solution est que le contrôle d'admission d'appel est implémenté dans le CRNC qui n'a pas connaissance (dans l'état actuel de la norme) du TFC instantané (le CRNC a seulement connaissance du TFCS, le TFC étant connu de l'UE, du Node B et du SRNC). Cependant, avec une signalisation appropriée, ou si le contrôle d'admission d'appels était implémenté dans une entité ayant connaissance de cette information, une telle solution pourrait être applicable.

Pour les canaux de transport communs (incluant le DSCH) une telle solution semble applicable dans l'état actuel de la norme (à la fois pour le sens montant et pour le sens descendant) puisque la fonction MAC-c/sh (qui choisit le TFC pour les canux communs et paratgés) est implémentée dans le CRNC.

Pra ailleurs, un autre inconvénient de l'exemple de solution décrit précédemment est que si on considère le cas où plusieurs canaux de transport sont multiplexés sur un canal physique, et ne nécessitent pas les mêmes ressources de traitement (par exemple l'un utilisant un code convolutionnel et l'autre un turbo-code), le coût sera choisi en fonction du débit d'ensemble sans prendre en compte le fait que les deux canaux de transport nécessitent des ressources de traitement différentes.

Pour éviter cet inconvénient, une solution serait de signaler le coût d'allocation par débit et par canal de transport, le coût total pour tous les canaux de transport étant calculé par le CRNC en fonction des types de canaux de transport. Une telle solution permettrait de distinguer les différents canaux de transport, permettant ainsi d'avoir différents coûts d'allocation pour des canaux de transport ayant des caractéristiques différentes. Comme décrit précédemment, le coût d'allocation peut être basé sur le débit maximum du canal de transport considéré (donné par le TFCS) ou sur le débit effectif (donné par le TFC courant).

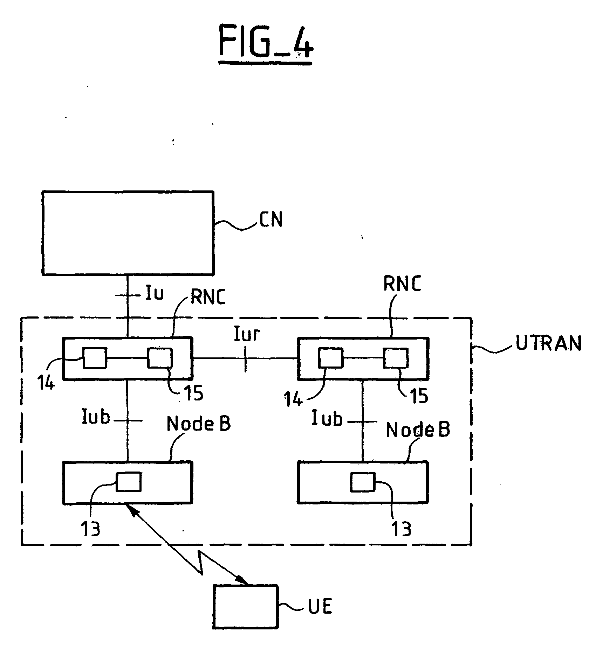

La figure 4 est un schéma destiné à illustrer un exemple de moyens à prévoir suivant l'invention dans une station de base (ou Node B dans un système tel que le système UMTS), et dans un contrôleur de stations de base (ou RNC pour un système tel que le système UMTS), pour mettre en oeuvre un procédé suivant l'invention.

Une station de base notée Node B comporte ainsi (en plus d'autres moyens qui peuvent être des moyens classiques):

- des moyens notés 13 pour signaler à un contrôleur de stations de base sa capacité de traitement globale, ou crédit de capacité, et la quantité de cette capacité de traitement globale, ou coût d'allocation, nécessaire pour l'allocation de ressources radio, pour différentes valeurs de débit.

Un contrôleur de stations de base noté RNC comporte ainsi (en plus d'autres moyens qui peuvent être des moyens classiques):

- des moyens notés 14 pour recevoir d'une station de base sa capacité de traitement globale, ou crédit de capacité, et la quantité de cette capacité de traitement globale, ou coût d'allocation, nécessaire pour l'allocation de ressources radio, pour différentes valeurs de débit,
- des moyens notés 15 pour mettre à jour le crédit de capacité à chaque allocation de ressources radio, en fonction du débit correspondant.

Ces différents moyens peuvent opérer suivant le procédé décrit précédemment; leur réalisation particulière ne présentant pas de difficulté particulière pour l'homme du métier, de tels moyens ne nécessitent pas d'être décrits ici de manière plus détaillée que par leur fonction.

**Revendications**

1. Procédé de gestion de ressources de traitement dans un système de radiocommunications mobiles, dans lequel un contrôleur de stations de base gère des ressources radio et des ressources de traitement correspondantes, ces dernières étant prévues dans une station de base, procédé dans lequel:

   la stations de base signale au contrôleur de stations de base sa capacité de traitement globale, ou crédit de capacité, et la quantité de cette capacité de traitement globale, ou coût d'allocation, nécessaire pour l'allocation de ressources radio,
   - le contrôleur de stations de base met à jour le crédit de capacité, à chaque allocation de ressources radio,

procédé **caractérisé en ce que** :

- la station de base signale au contrôleur de stations de base sa capacité de traitement globale, ou crédit de capacité, est la quantité de cette capacité de traitement globale, ou coût d'allocation, nécessaire pour l'allocation de ressources radio, pour différentes valeurs de débit,
- le contrôleur de stations de base met à jour le crédit de capacité à chaque allocation de ressources radio, en fonction du débit correspondant.

**2.** Procédé selon la revendication 1, dans lequel lesdites différentes valeurs de débit correspondent à des valeurs de débit prédéterminées appelées débits de référence.

**3.** Procédé selon la revendication 2, dans lequel le coût d'allocation pour ledit débit correspondant est obtenu à partir du coût d'allocation pour des débits de référence.

**4.** Procédé selon la revendication 3, dans lequel le coût d'allocation pour ledit débit correspondant est obtenu par interpolation à partir du coût d'allocation pour des débits de référence.

**5.** Procédé selon la revendication 4, dans lequel, lorsque le débit $R$ n'est pas un débit de référence, le coût d'allocation *"Consumption_cost"* est calculé en fonction des coûts d'allocation $C_{inf}$ et $C_{sup}$ correspondant aux débits de référence $R_{inf}$ et $R_{sup}$ (avec $R_{inf} < R_{sup}$) qui sont les plus proches du débit $R$ , selon la relation suivante:

$$Consumption\_cost = C_{inf} + \frac{R - R_{inf}}{R_{sup} - R_{inf}}\left(C_{sup} - C_{inf}\right)$$

**6.** Procédé selon l'une des revendications 4 et 5, dons lequel, si le résultat de l'interpolation est négatif, le coût d'allocation est fixé égal à zéro.

**7.** Procédé selon l'une des revendications 1 à 6, dans lequel ledit débit correspondant correspond à un débit maximum.

**8.** Procédé selon la revendication 7, dans lequel ledit débit maximum est obtenu suivant l'expression :

$$Maximum\_bit\_rate = \underset{j}{\mathrm{Max}}\, br_j$$

avec :

$$br_j = \sum_{k=1}^{n} \frac{N_k^{(j)} L_k^{(j)}}{TTI_k}$$

où $br_j$ est le débit du $j$ème TFC, ou $j$ème combinaison de formats de transport, dans un TFCS, ou ensemble de combinaisons de formats de transport, $n$ est le nombre de canaux de transport multiplexés dans un même canal de transport composite codé, $N_k^{(j)}$ et $L_k^{(j)}$ sont respectivement le nombre de blocs de transport et la taille des blocs de transport (en nombre de bits) pour le $k$ème canal de transport dans le $j$ème TFC et $TTI_k$ est l'intervalle de temps de transmission ou TTI (en secondes) du $k$ème canal de transport.

**9.** Procédé selon l'une des revendications 1 à 8, dans lequel ledit débit correspondant correspond à un débit effectif.

**10.** Procédé selon l'une des revendications 1 à 9, dans lequel des côuts d'allocation distincts sont signalés pour différents canaux de transport ou différents types de canaux de transport.

**11.** Procédé selon l'une des revendications 1 à 10, dans lequel des coûts d'allocation distincts et des crédits de capacité distincts sont signalés pour les sens de transmission montant et descendant.

**12.** Procédé selon l'une des revendications 1 à 11, dans lequel des coûts d'allocation distincts sont signalés pour le cas de premier lien radio et pour le cas de lien radio additionnel.

**13.** Procédé selon l'une des revendications 1 à 12, dans lequel des coûts d'allocation distincts sont signalés pour différents types de traitement, notamment pour différents types de codage-canal.

**14.** Procédé selon l'une des revendications 1 à 13, dans lequel des coûts d'allocation distincts sont signalés pour différents canaux de transport multiplexés à l'intérieur d'un même canal de transport composite codé.

**15.** Procédé selon l'une des revendications 1 à 14, dans lequel ledit système est de type CDMA.

**16.** Système de radiocommunications mobiles, pour la mise en oeuvre d'un procédé selon l'une des revendications 1 à 15, système dans lequel un contrôleur de stations de base gère des ressources radio et des ressources de traitement correspondantes, ces dernières étant prévues dons une stations de base (Node 6), système dans lequel:

la station de base comporte des moyens (13) pour signaler à la première entité sa capacité de traitement globale, ou crédit de capacité, et la quantité de cette capacité de traitement globale, ou coût d'allocation, nécessaire pour l'allocation de ressources radio, pour différentes valeurs de débit,
- le contrôleur de stations de base comporte des moyens (15) pour mettre à jour le crédit de capacité à chaque allocation de ressources radio, en fonction du débit correspondant.

**17.** Station de base pour système de radiocommunications mobiles, pour la mise en oeuvre d'un procédé selon l'une des revendications 1 à 15, ladite station de base comportant :

- des moyens (13) pour signaler à un contrôleur de stations de base sa capacité de traitement globale, ou crédit de capacité, et la quantité de cette capacité de traitement globale, ou coût d'allocation, nécessaire pour l'allocation de ressources radio, pour différentes valeurs de débit.

**18.** Contrôleur de stations de base pour système de radiocommunications mobiles, pour la mise en oeuvre d'un procédé selon l'une des revendications 1 à 15, ledit contrôleur de stations de base comportant :

- des moyens (14) pour recevoir d'une station de base sa capacité de traitement globale, ou crédit de capacité, et la quantité de cette capacité de traitement globale, ou coût d'allocation, nécessaire pour l'allocation de ressources radio, pour différentes valeurs de débit,
- des moyens (15) pour mettre à jour le crédit de capacité à chaque allocation de ressources radio, en fonction du débit correspondant.

**Claims**

**1.** A method of managing processing resources in a mobile radio system in which a base station controller manages radio resources and corresponding processing resources, said processing resources being provided in a separate base station, in which method:

- the base station signals to the base station controller its overall processing capacity (which is also known as the capacity credit) and the amount of that overall processing capacity (which is also known as the consumption cost) required for allocating radio resources for different bit rate values, and
- the base station controller updates the capacity credit on each allocation of radio resources.

said method being **characterized by** the fact that:

- the base station signals to the base station controller its overall processing capacity (which is also known as the capacity credit) and the amount of that overall processing capacity (which is also known as the consumption cost) necessary for allocating radio resources,
- the base station controller updates the capacity credit on each allocation of radio resources as a function of the corresponding bit rate.

2. A method according to claim 1, wherein said different bit rate values correspond to predetermined bit rates referred to as reference bit rates,

3. A method according to claim 2, wherein the consumption cost for said corresponding bit rate is obtained from the consumption cost for reference bit rates.

4. A method according to claim 3, wherein the consumption cost for said corresponding bit rate is obtained from the consumption cost for reference bit rates by interpolation,

5. A method according to claim 4, wherein, when the bit rate $R$ is not a reference bit rate, the consumption cost is calculated as a function of consumption costs $C_{inf}$ and $C_{sup}$ corresponding to the reference bit rates $R_{inf}$ and $R_{sup}$ that are the closest to the bit rate $R$ and where $R_{inf} < R_{sup}$, in accordance with the following equation:

$$Consumption\_cost = C_{inf} + \frac{R - R_{inf}}{R_{sup} - R_{inf}}(C_{sup} - C_{inf})$$

6. A method according to either claim 4 or claim 5, wherein the consumption cost is set at zero if the interpolation result is negative.

7. A method according to any one of claims 1 to 6, wherein said corresponding bit rate corresponds to a maximum bit rate.

8. A method according to claim 7, wherein said maximum bit rate is obtained from the equation:

$$Maximum\_bit\_rate = \underset{j}{Max}\ br_j$$

where:

$$br_j = \sum_{k=1}^{n} \frac{N_k^{(j)} L_k^{(j)}}{TTI_k}$$

and in which $br_j$ is the bit rate of $j^{th}$ transport format combination (TFC) in the TFCS, $n$ is the number of transport channels in the CCTrCh, $N_k^{(j)}$ and $L_k^{(j)}$ are respectively the number of transport blocks and the size of the transport blocks expressed as a number of bits for the $k^{th}$ transport channel in the $j^{th}$ TFC, and $TTI_k$ is the transmission time interval (TTI) expressed in seconds of the $k^{th}$ transport channel

9. A method according to any one of claims 1 to 8, wherein said corresponding bit rate corresponds to an effective bit rate.

10. A method according to any one of claims 1 to 9, wherein different consumption costs are signaled for different transport channels or different transport channel types.

11. A method according to any one of claims 1 to 10, wherein different consumption costs and different capacity credits are signaled for the uplink and downlink transmission directions,

12. A method according to any one of claims 1 to 11, wherein different consumption costs are signaled for a first radio link and for an additional radio link.

13. A method according to any one of claims 1 to 12, wherein different consumption costs are signaled for different types of processing, in particular for different types of channel coding.

14. A method according to any one of claims 1 to 13, wherein different consumption costs are signaled for different transport channels multiplexed within the same coded composite transport channel.

15. A method according to any one of claims 1 to 14, wherein said system is a CDMA system.

16. A mobile radio system for implementing a method according to any one of claims 1 to 15, in which system a base station controller manages radio resources and corresponding processing resources, said processing resources being provided in a base station, in which system:

the base station includes means (13) for signaling to the fist entity its overall processing capacity (which is also known as the capacity credit) and the amount of that overall processing capacity (which is also known as the consumption cost) required for allocating radio resources for different bit rate values, and
- the base station controller includes means (15) for updating the capacity credit on each allocation of radio resources as a function of the corresponding bit rate.

17. A base station for a mobile radio system for implementing a method according to any one of claims 1 to 15, said base station including,

- means (13) for signaling to a base station controller its overall processing capacity (which is also known as the capacity credit) and the amount of that overall processing capacity (which is also known as the consumption cost) necessary for allocating radio resources for different bit rate values.

18. A base station controller for a mobile radio system for implementing a method according to any one of claims 1 to 15, said base station controller including:

- means (14) for receiving from a base station its overall processing capacity (which is also known as the capacity credit) and the amount of that overall processing capacity (which is also known as the consumption cost) required for allocating radio resources for different bit rate values, and
- means (15) for updating the capacity credit on each allocation of radio resources as a function of the corresponding bit rate.

**Patentansprüche**

1. Verfahren zum Verwalten von Verarbeitungsressourcen in einem Mobilfunksystem, bei dem ein Basisstationen-Controller Funkressourcen und dazugehörige Verarbeitungsressourcen verwaltet, wobei letztere in einer Basisstation vorgesehen sind, wobei in dem Verfahren:

- die Basisstation dem Basisstationen-Controller ihre Gesamtverarbeitungskapazität oder den Kapazitätskredit sowie die Menge dieser Gesamtverarbeitungskapazität oder die Zuweisungskosten signalisiert, die für die Zuweisung von Funkressourcen notwendig sind;
- der Basisstationen-Controller den Kapazitätskredit bei jeder Zuweisung von Funkressourcen aktualisiert:

wobei das Verfahren **dadurch gekennzeichnet ist, dass**:

- die Basisstation dem Basisstationen-Controller ihre Gesamtverarbeitungskapazität oder den Kapazitätskredit und die Menge dieser Gesamtverarbeitungskapazität oder die Zuweisungskosten signalisiert, die für die Zuweisung der Funkressourcen für unterschiedliche Bitratenwerte benötigt wird
- der Basisstationen-Controller den Kapazitätskredit bei jeder Zuweisung von Funkressourcen in Abhängigkeit von der dazugehörigen Bitrate aktualisiert.

2. Verfahren nach Anspruch 1, bei dem die verschiedenen Bitratenwerte zuvor festgelegten Bitratenwerten entsprechen, die als Referenzbitraten bezeichnet werden,

3. Verfahren nach Anspruch 2, bei dem die Zuweisungskosten für die dazugehörige Bitrate ausgehend von den Zuweisungskosten für Referenzbitraten ermittelt werden.

4. Verfahren nach Anspruch 3, bei dem die Zuweisungskosten für die dazugehörige Bitrate durch interpolation ausgehend von den Zuweisungskosten für Referenzbitraten ermittelt werden,

**5.** Verfahren nach Anspruch 4, bei dem dann, wenn die Bitrate $R$ keine Referenzbitrate ist, die Zuweisungskosten "*Consumption_cost*" in Abhängigkeit von den Zuweisungskosten $C_{inf}$ und $C_{sup}$ ermittelt werden, die den Referenzbitraten $R_{inf}$, und $R_{sup}$ (mit $R_{inf} < R_{sup}$) entsprechen, welche am nächsten an der Bitrate $R$ liegen, gemäß der folgenden Gleichung:

$$Consumption\_cost = C_{inf} + \frac{R - R_{inf}}{R_{sup} - R_{inf}}(C_{sup} - C_{inf})$$

**6.** Verfahren nach einem der Ansprüche 4 und 5, bei dem dann, wenn das Ergebnis der Interpolation negativ ist, die Zuweisungskostengleich Null festgelegt werden.

**7.** Verfahren nach einem der Ansprüche 1 bis 6, bei dem die dazugehörige Bitrate einer maximalen Bitrate entspricht.

**8.** Verfahren nach Anspruch 7, bei dem die maximale Bitrate ermittelt wird gemäß dem Ausdruck:

$$Maximum\_bit\_rate = \underset{j}{Max}\, br_j$$

mit:

$$br_j = \sum_{k=1}^{n} \frac{N_k^{(j)} L_k^{(j)}}{TTI_k}$$

wobei $br_j$ die Bitrate der $j$-ten TFC oder $j$-ten Transportformatkombination in einer TFCS oder Menge der möglichen Transportformatkombinationen ist, " die Anzahl der gemultiplexten Transportkanäle im selben codieren zusammengesetzten Transportkanal ist, $N_k^{(j)}$ und $L_k^{(j)}$ die Anzahl der Transportblöcke beziehungsweise die Größe der Transportblöcke (in der Anzahl an Bits) für den $k$-ten Transportkanal in der $j$-ten TFC sind und $TTI_k$ das Übertragungszeittntervait oder TTI (in Sekunden) des $k$-ten Transportkanals ist.

**9.** Verfahren nach einem der Ansprüche 1 bis 8, bei dem die dazugehörige Bitrate einer effektiven Bitrate entspricht.

**10.** Verfahren nach einem der Ansprüche 1 bis 9, bei dem für unterschiedliche Transportkanäle oder unterschiedliche Transportkanaltypen verschiedene Zuweisungskosten signalisiert werden.

**11.** Verfahren nach einem der Ansprüche 1 bis 10, bei dem für die Uplink- und die Dowlink-Üheriragungsrichtung verschiedene Zuweisungskosten und verschiedene Kapazitätskredite signalisiert werden.

**12.** Verfahren nach einem der Ansprüche 1 bis 11, bei dem für den Fall der ersten Funkverbindung und für den Fall einer zusätzlichen Funkverbindung verschiedene Zuweisungskosten signalisiert werden.

**13.** Verfahren nach einem der Ansprüche 1 bis 12, bei dem für unterschiedliche Verarbeitungstypen, insbesondere für unterschiedliche Arten der Kanal-Codierung, verschiedene Zuweisungskosten signalisiert werden,

**14.** Verfahren nach einem der Ansprüche 1 bis 13, bei dem für unterschiedliche gemultiplexte Transportkanäle innerhalb eines selben codierten zusammengesetzten Transportkanals verschiedene Zuweisungskosten signalisiert werden,

**15.** Verfahren nach einem der Ansprüche 1 bis 14, bei dem das System ein System des CDMA-Typs ist.

**16.** Mobirfunksystem zur Umsetzung eines Verfahrens nach einem der Ansprüche 1 bis 15, wobei in dem System ein Basisstationen-Controller Funkressourcen und dazugehörige Verarbeitungsressourcen verwaltet, wobei letztere in einer Basisstation (Node B) vorgesehen sind, wobei in dem System:

- die Basisstation Mittel (13) umfasst, um der ersten instanz ihre Gesamtverarbeitungskapazität oder den Kapazitätskredit sowie die Menge dieser Gesamtverarbeitungskapazität oder die Zuweisungskosten zu signalisieren, die für die Zuweisung von Funkressourcen für unterschiedliche Bitratenwerte notwendig sind;
- der Basisstationen-Controller Mittel (15) umfasst, um den Kapazitätskredit bei jeder Zuweisung von Funkressourcen in Abhängigkeit von der dazugehörigen Bitrate zu aktualisieren,

**17.** Basisstation für ein Mobilfunksystem zur Umsetzung eines Verfahrens nach einem der Anspruche 1 bis 15, wobei diese Basisstation umfasst:

- Mittel (13), um einem Basisstationen-Controller ihre Gesamtverarbeitungskapazität oder den Kapazitätskredit sowie die Menge dieser Gesamtverarbeitungskapazität oder die Zuweisungskosten zu signalisieren, die für die Zuweisung von Funkressourcen für unterschiedliche Bitratenwerte notwendig sind.

**18.** Basisstationen-Controller für ein Mobilfunksystem zur Umsetzung eines Verfahrens nach einem der Ansprüche 1 bis 15, wobei der Basisstationen-Controller umfasst:

- Mittel (14), um von einer Basisstation ihre Gesamtverarbeitungskapazität oder den Kapazitätskredit sowie die Menge dieser Gesamtverarbeitungskapazität oder die Zuweisungskosten zu empfangen, die für die Zuweisung von Funkressourcen für unterschiedliche Bitratenwerte notwendig sind;
- Mittel (15), um den Kapazitätskredit bei jeder Zuweisung von Funkressourcen in Abhängigkeit von der dazugehörigen Bitrate zu aktualisteren.

# FIG_1

FIG_2

FIG_3

# FIG_4

**EP 1 223 782 B1**

**RÉFÉRENCES CITÉES DANS LA DESCRIPTION**

**Documents brevets cités dans la description**

- FR 0010538